(19) Europäisches Patentamt
European Patent Office
Office européen des brevets

(11) EP 3 696 094 A1

(12) **EUROPEAN PATENT APPLICATION**

(43) Date of publication:
**19.08.2020 Bulletin 2020/34**

(51) Int Cl.:
***B64F 1/36*** *(2017.01)* ***G06Q 10/06*** *(2012.01)*
***G06Q 50/30*** *(2012.01)*

(21) Application number: **20156665.0**

(22) Date of filing: **11.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2019 IN 201911005447**

(71) Applicant: **General Electric Company**
**Schenectady, NY 12345 (US)**

(72) Inventors:
- **RAJAGURU, Aparna**
  **560066 Bangalore (IN)**
- **AGARWAL, Anurag**
  **560066 Bangalore (IN)**

(74) Representative: **Openshaw & Co.**
**8 Castle Street**
**Farnham, Surrey GU9 7HR (GB)**

# (54) AIRCRAFT STAND RECOVERY OPTIMIZATION

(57) Systems and methods for allocating flights to aircraft stands are provided. In one example aspect, a system includes one or more computing devices. The computing devices are configured to generate a stand recovery plan that reallocates flights to available aircraft stands following a flight schedule disruption. Flights associated with an aircraft stand conflict can be reallocated to aircraft stands that are available within a determined time slot, by ensuring that the available aircraft stands meet one or more scheduling constraints or criteria, and based at least in part on a determined weighted total walk time. The weighted total walk time takes into account the estimated walk time between aircraft stands and/or their associated gates as well as the connecting time between flights. Once aircraft stands are reallocated to flights associated with the identified aircraft stand conflict(s), a stand recovery plan can be generated in real time.

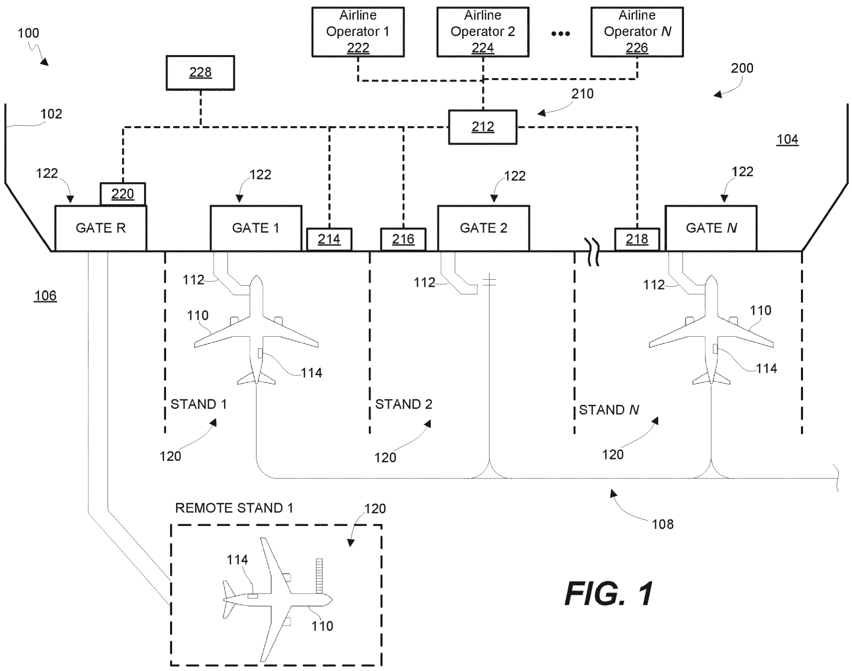


FIG. 1

EP 3 696 094 A1

## Description

### FIELD

The subject matter of the present disclosure relates generally to aircraft stand plans, and more particularly, to generating optimized aircraft stand plans after one or more disruptions and/or scheduling conflicts.

### BACKGROUND

Airports typically include a plurality of aircraft stands or bays. Generally, an aircraft stand is a designated area in which an aircraft can be parked at an airport or airfield, e.g., so that passengers can board or disembark from the aircraft. Aircraft stands typically have an associated gate. A gate is a designated passenger waiting and boarding/disembarking area within a terminal of an airport. A boarding bridge can provide a pathway for passengers to move between the gate and an aircraft parked in the aircraft stand.

In addition to creating flight schedules or plans, airline operators have conventionally created stand plans between twelve and fifteen hours ahead of a given flight. A stand plan allocates or assigns aircraft stands to all planned flights. In some instances, one or more disruptions occur (e.g., fog, rain, snow, unexpected aircraft maintenance, etc.). Such disruptions can cause the flight schedule to change, even when close to the flight time of a given flight. Airline operators attempt to identify stand conflicts (e.g., two or more flights scheduled to utilize the same aircraft stand at the same time) and manually move conflicting flights to free or available stands to resolve the conflicts. When such disruptions occur close to the time of flight, an airline operator's network operations center has little time to react and generate an updated stand plan. Accordingly, this can lead to adoption of a less than optimal updated stand plan and instability in the airline operator's network due to many changes in the stand plan close to the time of flight, which in turn can affect ground operations.

Accordingly, a system and method for generating a recovery stand plan that addresses one or more of the challenges noted above would be useful.

### BRIEF DESCRIPTION

Aspects and advantages of the invention will be set forth in part in the following description, or may be obvious from the description, or may be learned through practice of the invention.

In one aspect, a method for determining a stand recovery plan that allocates a plurality of aircraft stands with a plurality of flights is provided. The method includes receiving, by one or more computing devices, data indicative of a flight plan, a current stand plan, passenger connection information, and one or more scheduling constraints associated with the plurality of aircraft stands. The method also includes identifying, by the one or more computing devices, an aircraft stand conflict based at least in part on the received data, wherein the aircraft stand conflict is indicative of two or more flights of the plurality of flights being associated with one aircraft stand of the plurality of aircraft stands within a time period. Further, the method includes determining, by the one or more computing devices, one or more available aircraft stands selected from the plurality of aircraft stands based at least in part on the received data. The method also includes determining, by the one or more computing devices, a weighted total walk time for a plurality of aircraft stand combinations each having an arrival stand and a departure stand, wherein the weighted total walk time is determined for each of the plurality of aircraft stand combinations based at least in part on a walk time between the arrival stand and the departure stand and a decay function that utilizes a connection time between flights for each passenger associated with one or more of the two or more flights associated with the aircraft stand conflict. Moreover, the method includes reallocating, by the one or more computing devices, one of the one or more available aircraft stands to one of the two or more flights associated with the aircraft stand conflict based at least in part on the determined weighted total walk time. The method also includes generating, by the one or more computing devices, the stand recovery plan based at least in part on the reallocated aircraft stand.

In some implementations, the weighted total walk time is determined for each of the plurality of aircraft stand combinations as a summation of the walk time between the arrival stand and the departure stand multiplied by the decay function that utilizes the connection time between flights for each passenger associated with one or more of the two or more flights associated with the aircraft stand conflict.

In some implementations, reallocating, by the one or more computing devices, one of the one or more available aircraft stands to one of the two or more flights associated with the aircraft stand conflict based at least in part on the determined weighted total walk time comprises reallocating the available aircraft stand associated with the smallest determined weighted total walk time.

In some implementations, the weighted total walk time is defined by: $T_{Walk} = \sum_{PAX_N} w_{ij} F_{ai} F_{bj} wt(CT_{ab})$, wherein $T_{Walk}$ is the weighted total walk time, $PAX_N$ is a number of passengers associated with one of the flights of the two or more flights associated with the aircraft stand conflict, $w_{ij}$ is the walk time between the arrival stand $i$ and the departure stand $j$, wherein one of the arrival stand $i$ and the departure stand $j$ is selected from the one or more determined available aircraft stands, $F_{ai}$ is a variable set at one (1) if the flight is assigned to the arrival stand $i$ and zero (0) otherwise, $F_{bj}$ is a variable set at one (1) if the flight is assigned to the departure stand $j$ and zero (0) otherwise, and $wt(CT_{ab})$ is the decay function associated with the connection time between flights for connecting passengers, wherein the decay function is set such that passengers with less connection time are prioritized over passengers with more connection time.

In some implementations, the method further includes determining, by the one or more computing devices, whether the one or more available aircraft stands selected from the plurality of aircraft stands meet the one or more scheduling constraints. In such implementations, the one or more computing devices only determine the weighted total walk time for the available aircraft stands that meet the one or more scheduling constraints.

In some implementations, the one or more scheduling constraints include at least one of a churn minimizing constraint, a contact/remote stand ratio constraint, a remote stand limit constraint, an aircraft/stand compatibility constraint, an aircraft stand priority rules constraint, an aircraft stand security rules constraint, and a flagship flight constraint.

In some implementations, the method includes generating, by the one or more computing devices, a unique identifier for the plurality of flights based at least in part on the received data, wherein the unique identifier is indicative of the aircraft stand associated with the flight and a time of flight.

In some implementations, the one or more available aircraft stands are determined, by the one or more computing devices, based at least in part on the generated unique identifiers.

In some implementations, the method further includes routing, by the one or more computing devices, the generated stand recovery plan to a flight scheduling solver.

In another aspect, a system is provided. The system includes one or more computing devices having one or more memory devices and one or more processing devices, the one or more memory devices storing computer-readable instructions that can be executed by the one or more processing devices to perform operations. In performing the operations, the one or more processing devices are configured to: receive data indicative of a current stand plan, a flight plan, passenger connection information, and one or more scheduling constraints associated with a plurality of aircraft stands; identify an aircraft stand conflict based at least in part on the received data, wherein the aircraft stand conflict is indicative of two or more flights being associated with one aircraft stand of the plurality of aircraft stands within a time period; determine one or more available aircraft stands based at least in part on the received data; resolve the identified aircraft stand conflict based at least in part on the received data and the one or more determined available aircraft stands, wherein resolving the identified aircraft stand comprises i) determining whether the one or more available aircraft stands meet the one or more scheduling constraints; ii) determining a weighted total walk time; and iii) and reallocating one of the available aircraft stands that meets the one or more scheduling constraints to one of the flights associated with the identified aircraft stand conflict based at least in part on the determined weighted total walk time; and generate a stand recovery plan based at least in part on the resolved aircraft stand conflict.

In some embodiments, in determining the one or more available aircraft stands based at least in part on the received data, the one or more processing devices are configured to: determine a time slot in which an available aircraft stand is needed; and determine which aircraft stands of the plurality of aircraft stands are available within the determined time slot.

In some embodiments, the one or more processing devices are further configured to: generate, by the one or more computing devices, a unique identifier for each of the plurality of flights based at least in part on the received data, wherein the unique identifier is indicative of the aircraft stand associated with the flight and a time of flight, and wherein the one or more available aircraft stands are determined, by the one or more computing devices, based at least in part on the generated unique identifiers.

In some embodiments, the one or more processing devices are further configured to: generate, by the one or more computing devices, a unique identifier for each of the plurality of flights based at least in part on the received data, wherein the unique identifier is indicative of the aircraft stand associated with the flight and a time of flight, and wherein in identifying the one or more aircraft stand conflicts based at least in part on the received data, the one or more processing devices are further configured to: map each of the unique identifiers with their associated one of the plurality of aircraft stands; and determine whether two or more of the plurality of flights are associated with one of the plurality of aircraft stands within the time period based on the mapped unique identifiers.

In some embodiments, in determining the weighted total walk time, the one or more processing devices are configured to: calculate the weighted total walk time for a plurality of aircraft stand combinations each having an arrival stand and a departure stand, wherein the weighted total walk time is determined for each of the plurality of aircraft stand combinations based at least in part on a walk time between the arrival stand and the departure stand and a decay function that utilizes a connection time between flights for each passenger associated with one or more of the two or more flights associated with the aircraft stand conflict.

In some embodiments, the determined weighted total walk time is defined by: $T_{Walk} = \sum_{PAX_N} w_{ij} F_{ai} F_{bj} wt(CT_{ab})$, wherein $T_{Walk}$ is the weighted total walk time, $PAX_N$ is a number of passengers associated with one of the flights of the two or more flights associated with the aircraft stand conflict, $w_{ij}$ is the walk time between the arrival stand $i$ and the departure stand $j$, wherein one of the arrival stand $i$ and the departure stand $j$ is selected from the one or more determined available aircraft stands, $F_{ai}$ is a variable set at one (1) if the flight is assigned to the arrival stand $i$ and zero (0) otherwise, $F_{bj}$ is a variable set at one (1) if the flight is assigned to the departure stand *j* and zero (0) otherwise, and $wt(CT_{ab})$ is the decay function associated with the connection time between flights for connecting passengers, wherein the decay function is set such that passengers with less connection time are prioritized over passengers with more connection time.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

## BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 provides a schematic view of an airport having a plurality of aircraft stands in accordance with an example embodiment of the present subject matter;

FIG. 2 provides a flow diagram of a method for generating a stand recovery plan via a Schedule Recovery System (SRS) in accordance with an example embodiment of the present subject matter;

FIG. 3 provides a block diagram depicting an example manner in which the SRS system of FIG. 2 can generate the stand recovery plan in accordance with an example embodiment of the present subject matter;

FIG. 4 provides a table depicting various flight details associated with various flights operated by an airline operator in accordance with an example embodiment of the present subject matter;

FIG. 5 provides a table depicting various aircraft stand details associated with the flights provided in FIG. 4;

FIG. 6 provides a table depicting passenger connection information for one of the flights provided in FIG. 4;

FIG. 7 provides a table depicting a stand master for an airport associated with the flights provided in FIG. 4;

FIG. 8 provides a table depicting a stand compatibility master that associates compatibility between certain aircraft stands and certain aircraft operated by the airline operator;

FIG. 9 provides a table depicting a distance master for the airport associated with the flights provided in FIG. 4;

FIG. 10 provides a table depicting unique identifiers generated for flights provided in FIG. 4;

FIG. 11 provides a table depicting unique identifiers being mapped with their associated aircraft stands for predetermined time periods;

FIG. 12 provides a table depicting various example scheduling constraints that can be considered in selecting an optimal aircraft stand to reallocate to a conflicting flight associated with an aircraft stand conflict;

FIG. 13 provides a schematic view of a plurality of aircraft stands of an airport in accordance with an example embodiment of the present subject matter;

FIG. 14 provides an example generated stand recovery plan in accordance with an example embodiment of the present subject matter;

FIG. 15 provides a table depicting unique identifiers being mapped with their associated aircraft stands in accordance with a generated stand recovery plan; and

FIG. 16 provides an example computing system in accordance with an example embodiment of the present subject matter.

## DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. Furthermore, as used herein, terms of approximation, such as "approximately," "substantially," or "about," refer to being within a fifteen percent (15%) margin of error unless otherwise stated. Furthermore, as used herein, the term "real time" refers to at least one of the time of occurrence of the associated events, the time of measurement and collection of predetermined data, the time to process the data, and the time of a system response to the events and the environment. In the embodiments described herein, these activities and events occur substantially instantaneously.

Systems and methods for allocating flights to aircraft stands are provided. In one example aspect, a Schedule Recovery System (SRS) is provided. The system includes a computing system having one or more computing devices. Generally, the one or more computing devices are configured to generate or create a stand recovery plan that reallocates flights to available aircraft stands following a flight schedule disruption. The conflicting flights can be reallocated to aircraft stands that are available within a determined time slot taking into account pre-flight and post-flight buffer times. Moreover, the conflicting flights can be reallocated to aircraft stands in such a way that the churn or reassignment of flights is minimized. Further, the conflicting flights can be reallocated to available aircraft stands that meet one or more scheduling constraints or criteria. In addition, notably, the conflicting flights can be reallocated to available aircraft stands based at least in part on a determined weighted total walk time. The weighted total walk time takes into account the estimated walk time between aircraft stands and/or their associated gates as well as the connecting time between flights. The weighted total walk time utilizes a decay function to prioritize passengers with shorter connecting flight times. In this way, the aircraft stand selected for reallocation is selected such that the distance/time passengers need to walk between stands can be minimized while prioritizing or ensuring that each passenger can make his/her connecting flight. Once aircraft stands are reallocated to connecting flights associated with the identified aircraft stand conflict(s), a stand recovery plan can be generated in real time and communicated to certain entities, including the airport operator, airline operators, passengers, etc.

The systems and methods described herein provide a number of technical effects, benefits, and improvements to systems for aircraft stand allocation and computing technology thereof. Particularly, the system and methods described herein generate or create a recovery stand plan that is optimal with respect to passenger walk times and ease of implementation on ground operations while meeting scheduling constraints and/or rules, e.g., set by airline operators or by an operator of the airport, including whether to reallocate a flight by weighting the benefit of contact vs remote stands and/or prioritizing flights that must be assigned to a particular aircraft stand. As recovery flight plans can be generated in real time or nearly in real time, the process of stand allocation recovery can be significantly improved over current systems and allocation schemes. The systems and methods described herein can also provide feedback to the flight recovery solver on viability of the flight plan, e.g., by routing the generated stand recovery plan thereto. Further, the systems and methods described herein can be configured as either a standalone system or as a downstream add-on to the flight scheduling solver system.

FIG. 1 provides a schematic view of a portion of an airport 100 in accordance with an example embodiment of the present subject matter. As depicted, the airport 100 has a terminal 102 that defines a secure indoor environment 104. For instance, passengers can be required to pass a security checkpoint to enter the secure indoor environment 104. Outside of the terminal 102 is an ambient or outdoor environment 106. The airport 100 includes a ramp or apron 108 that provides a defined area to accommodate aircrafts 110 for the purposes of loading or unloading passengers or cargo, refueling, parking, maintenance, etc.

The airport 100 includes a plurality of aircraft stands 120. Generally, the aircraft stands 120 or bays provide a designated area in which an aircraft can be parked, e.g., so that passengers can board or disembark from an aircraft. The plurality of aircraft stands 120 can be made up of one or more contact stands and one or more remote stands. For instance, for the depicted embodiment of FIG. 1, the airport 100 includes a plurality of contact stands, including Stand 1, Stand 2, and so on up to Stand N, which represents that the airport 100 can have any suitable number of contact stands. Each contact stand has an associated gate 122 that is directly adjacent or proximate to its associated contact stand. As illustrated, Stand 1 has an associated gate 122, denoted as Gate 1. Stand 2 has an associated gate 122, denoted as Gate 2. Further, Stand *N* has an associated gate 122, denoted as Gate *N*. The gates 122 provide a designated passenger waiting and loading/disembarking area within the terminal 102. A jet or boarding bridge 112 can provide a means for passengers to move between a gate and an aircraft parked in an aircraft stand.

The airport 100 can also include one or more remote stands. For instance, as shown in FIG. 1, the airport 100 includes Remote Stand 1. Although only one remote stand is shown in FIG. 1, it will be appreciated that the airport 100 can include any suitable number of remote stands. Generally, a remote stand is remote from or spaced from its associated gate. For instance, for the illustrated embodiment of FIG. 1, Remote Stand 1 is spaced from its associated gate, denoted as Gate R.

The airport 100 can have or be associated with a Schedule Recovery System (SRS) 200. Generally, the SRS system 200 is operable to generate a stand recovery plan that reallocates aircraft stands to flights following a disruption event or flight schedule change. The SRS system 200 can include a computing system 210. The computing system 210 can include one or more computing devices, including one or more scheduler computing devices 212. Further, the computing system 210 can include other computing devices, such as e.g., computing devices associated with each gate. For instance, as shown in FIG. 1, Gate 1 can have one or more associated first computing devices 214, Gate 2 can have one or more associated second computing devices 216, Gate N can have one or more associated Nth or third computing devices 218, and Gate R can have one or more associated fourth computing devices 220. The one or more computing devices associated with the gates are communicatively coupled with the one or more scheduler computing devices 212, e.g., via a suitable wired or wireless connection link. Each gate of the airport 100 can include a user interface that allows users to interact with the SRS system 200. For instance, each user interface can include a display and one or more input selector devices (e.g., a keyboard and mouse, touchscreens, etc.).

In addition, the computing system 210 of the SRS system 200 can include one or more computing devices associated with airline operators (e.g., an entity that operates an aircraft). For instance, as depicted in FIG. 1, one or more first airline operator computing devices 222 associated with a first airline operator, denoted as Airline Operator 1, can be communicatively coupled with the scheduler computing devices 212 of the computing system 210. Further, one or more second airline operator computing devices 224 associated with a second airline operator, denoted as Airline Operator 2, and one or more third airline operator computing devices 226 associated with an *N*th airline operator, denoted as Airline Operator *N*, can be communicatively coupled with the scheduler computing devices 212 of the computing system 210. The one or more computing devices 222, 224, 226 can be communicatively coupled with the one or more scheduler computing devices 212 in any suitable fashion, e.g., via a suitable wired or wireless connection link. Generally, data can be communicated between the one or more computing devices 222, 224, 226 associated with the airline operators and the scheduler computing devices 212. For instance, the airline operator computing devices can send data indicative of flight schedules, flight details, etc. and the scheduler computing devices can send data indicative of a stand recovery plan, for example. In addition, the computing system 210 of the SRS system 200 can include one or more airport computing devices 228 communicatively coupled with the scheduler computing devices 212, e.g., via a suitable wired or wireless connection link. The one or more airport computing devices 228 can be operated by the airport 100. The one or more airport computing devices 228 can send and receive data to/from the scheduler computing devices 212.

In some embodiments, each of the one or more computing devices 212, 214, 216, 218, 220, 222, 224, 226, 228 of computing system 210 include one or more processing devices and one or more memory devices. The one or more memory devices can store computer-readable instructions that can be executed by the one or more processing devices to perform operations. The one or more computing devices can be configured in substantially the same manner as one of the computing devices of the exemplary computing system 500 described below with reference to FIG. 15 and can be configured to perform one or more of the operations described herein, such as some or all of the operations of the method (300) described herein.

In some instances, one or more disruption events can occur (e.g., fog, rain, snow, unexpected aircraft maintenance, etc.). Such disruption events can cause the flight schedule to change. Accordingly, flight departure and/or arrival times can be changed or switched to accommodate the disruption event. Consequently, in some instances, stand allocations conflicts can arise. For instance, more than two (2) planned flights can be allocated to a single stand at the same time. As such, the SRS system 200 seeks to resolve stand allocation conflicts and to generate an optimized stand recovery plan that is compatible with the updated or recovered flight schedule as well as other constraints. Particularly, as will be explained below, the SRS system 200 generates an updated or stand recovery plan to minimize the impact on ground operations and passenger walk times while meeting all scheduling or business rules. The SRS system 200 can also generate the stand recovery plan by weighting contact vs remote stands, prioritizing flights that must be assigned a particular stand, and to avoid churn or moving too many flights to different stands.

With reference now to FIGS. 1, 2, and 3, FIG. 2 provides a flow diagram of a method (300) for generating a stand recovery plan via the SRS system 200 of FIG. 1 and FIG. 3 provides a block diagram depicting an example manner in which the SRS system 200 can generate the stand recovery plan in accordance with an example embodiment of the present subject matter. Some or all of the method (300) can be implemented by the SRS system 200 described herein. In addition, it will be appreciated that method (300) can be modified, adapted, expanded, rearranged and/or omitted in various ways without deviating from the scope of the present subject matter.

At (302), as depicted in FIG. 2, the method (300) includes receiving data indicative of a flight plan, a current stand plan, passenger connection information, and one or more scheduling constraints associated with a plurality of aircraft stands. For instance, as shown in FIG. 3, the one or more scheduler computing devices 212 can receive data 250. The data 250 can be indicative of a revised or recovery flight plan 252, a current stand plan 254, passenger connection information 256, and one or more scheduling constraints 258 associated with a plurality of aircraft stands, such as the aircraft stands 120 of the airport 100 of FIG. 1. The data 250 can be received from one or more sources. For instance, the recovery flight plan 252, the current stand plan 254, passenger connection information 256, and the one or more scheduling constraints 258 can be received from the one or more airline operator computing devices 222, 224, 226 operated by the airline operators. In addition, the one or more airport computing devices 228 communicatively coupled with the scheduler computing devices 212 can send and the one or more scheduler computing devices 212 can receive data 250 from the one or more airport computing devices 228, such as e.g., one or more passenger connection information 256 and/or scheduling constraints 258 and/or other data.

After a disruption event or some other occurrence that affects the flight schedule of an airline operator, a flight scheduling solver 240 (FIG. 3) of one or more computing devices of the computing system 210 (FIG. 1) can output a revised flight plan, denoted herein as the recovery flight plan 252. The scheduler computing devices 212 can receive the recovery flight plan 252 as part of the data 250, as noted above and shown in FIG. 3. The recovery flight plan 252 can include numerous flight details about each flight operated by the airline operator.

For instance, FIG. 4 provides a table depicting various flight details associated with flights operated by an airline operator. Each row represents a particular flight. In FIG. 4, three sample flights are shown, including a first flight, denoted as Flight 1, a second flight, denoted as Flight 2, and a third flight, denoted as Flight *N.* It will be appreciated that the recovery flight plan 252 can include any suitable number of flights and that flight recovery plans can be received for each airline operator operating aircrafts associated with the airport 100. As further shown in the table of FIG. 4, the columns present various flight details associated with the flights. For this example, the flight details include the Airline Operator, the Flight Number, whether the flight is an arrival or departure, denoted by the column title A/D, the Scheduled Date/Time, the New Date/Time, the Aircraft Type, the Aircraft Registration Number, the Origin, and the Destination associated with each flight. The Scheduled Date/Time represents the scheduled data and time of a flight prior to the disruption event or flight schedule change and the New Date/Time column represents the new data and time of a particular flight after the disruption event or schedule change. For instance, as shown in FIG. 4, Flight 1 was originally scheduled to arrive at the airport (e.g., DXB) at 11:05 on December 31, 2020 (31/12/2020). However, in accordance with the flight recovery plan 252, Flight 1 is now scheduled to arrive at the airport at 05:05 (5:05 am) on December 31, 2020. For Flight 2 and Flight *N*, there was no change to their arrival and departure times, respectively. It will be appreciated that the recovery flight plan 252 can include other flight details not explicitly listed in the table of FIG. 4.

The current stand plan 254 allocates or assigns an aircraft stand to each flight. That is, under the current stand plan 254, an aircraft stand is allocated to each flight operated by an airline operator. For instance, FIG. 5 provides a table depicting various aircraft stand details associated with the flights provided in FIG. 4. In FIG. 5, each row represents a particular flight, including Flight 1, Flight 2, and Flight *N.* It will be appreciated that the current stand plan 254 can include any suitable number of flights and associated aircraft stand details. As further shown in the table of FIG. 5, the columns present various aircraft stand details associated with the flights. For example, the aircraft stand details include the Airline Operator, the Flight Number, whether the flight is an arrival or departure, denoted by the column title A/D, the Scheduled Date/Time, the Aircraft Stand, and the Gate associated with each flight. As shown, an aircraft stand has been allocated to each flight. Specifically, for this example, Stand 1/Gate 1 has been allocated to Flight 1, Stand 1/Gate 1 has been allocated to Flight 2, and Stand N/Gate *N* has been allocated to Flight *N.* It will be appreciated that the current stand plan 254 can include other stand details not expressly listed in the table of FIG. 5.

The passenger connection information 256 can be descriptive of connection details of passengers aboard aircrafts associated with the plurality of flights. The connection details can include a list of passengers aboard a particular flight (e.g., a manifest) and whether one or more of the passengers are scheduled to make a connecting flight, and if so, the connecting flight number. For instance, FIG. 6 provides a table depicting passenger connection information 256 for a given flight associated with an airline operator. In FIG. 6, each row represents a passenger, including Passenger 1, Passenger 2, Passenger 3, Passenger 4, and so on to Passenger *N* for a particular flight, such as e.g., Flight 1. As further shown in the table of FIG. 6, the columns present various passenger connection details. For example, the passenger connection details can include whether the passengers have a connecting flight, denoted by the Connecting Flight column, the Arriving Gate of the flight, the Arrival Flight Number, and the Connecting Flight Number. In this example, Passenger 1, Passenger 4, and Passenger *N* do not have connecting flights, as denoted by the "N's" in the Connecting Flight column. However, as depicted, Passenger 2 and Passenger 3 have connecting flights, as denoted by the "Y's" in the Connecting Flight column. Passenger 2 and Passenger 3 have different connecting flights, and accordingly, the connecting flight numbers "ABC0008" and "ABC0009" are depicted in the Connecting Flight Number column for Passenger 2 and Passenger 4, respectively.

The data 250 received by the one or more scheduler computing devices 212 can include one or more scheduling constraints 258 as noted above. In some embodiments, the one or more scheduling constraints 258 of the data 250 can include a stand master that lists each aircraft stand in the airport and/or each aircraft stand in the airport associated with a particular airline operator, the terminal in which the gate associated with the aircraft stand is located, the concourse in which the gate or stand is located, the aircraft stand family in which the aircraft stands are a part of or associated with, the zone of the aircraft stand, whether the aircraft stand is a contact stand or a remote stand, etc.

For instance, FIG. 7 provides a table depicting a stand master 260 for a particular airport. As shown, the stand master 260 provides a plurality of details associated with the aircraft stands. As shown, for each aircraft stand (e.g., Stand 1, Stand 2, Stand R, and Stand *N*), the airport in which the aircraft stand is associated with is listed (e.g., DXB), the terminal (e.g., T2) in which the gate associated with the aircraft stand is located is listed, the concourse (e.g., contact or remote concourse) in which the gate or stand is located is listed, the aircraft stand family (e.g., family E) in which the aircraft stands are a part of or associated with is listed, and the zone (e.g., zone 1 or 2) of the aircraft stand is listed. It will be appreciated that the stand master 260 can include other details associated with the aircraft stands in other example embodiments.

The one or more scheduling constraints 258 of the data 250 can include various business rules set by airline operators. For instance, the one or more scheduling constraints 258 can include a stand compatibility master that provides certain compatibility rules associated with each of the aircraft stands. For example, FIG. 8 provides a table depicting a stand compatibility master 262 that associates compatibility between certain aircraft stands and certain aircraft operated by the airline operator. As shown, the columns of the table represent various aircraft types of the airline operator's fleet and the rows represent various aircraft stands at the airport. Each cell of the table of FIG. 8 includes either a zero (0) or a one (1). The zeros (0) represent that the particular aircraft is not compatible with the aircraft stand and the ones (1) represent that the aircraft is compatible with the aircraft stand. For example, Aircraft A319 is not compatible with Stand 1 as the corresponding cell contains a zero (0). However, Aircraft A340300 is compatible with Stand 1 as the corresponding cell contains a one (1). It will be appreciated that stand compatibility constraints can be received for each stand and aircraft of an airline operator's fleet. Moreover, it will be appreciated that stand compatibility constraints can be received by a plurality of airline operators.

Additionally, the one or more scheduling constraints 258 can include other business rules or constraints. For instance, an airline operator can grant certain flights priority to certain aircraft stands. As an example, the scheduling constraints 258 can be set such that a given flight has priority for Stand 2 of FIG. 1 over all other flights. The arrival-destination flight can be from NYC-DXB, or New York City to Dubai, for example. In some embodiments, an airline operator can grant one or more flights exclusivity to certain aircraft stands. In this way, only the one or more designated flights can utilize particular aircraft stands. An airline operator can also grant certain aircraft types priority or exclusivity to certain aircraft stands. For example, the Aircraft A380 can be granted priority or exclusivity to one or more aircraft stands.

In some further embodiments, the one or more scheduling constraints 258 can include other business rules or constraints as well. For instance, one or more airliner operators can set one or more airline buffer times before and/or a flight, e.g., to allow for loading and/or unloading baggage/cargo, boarding and/or disembarking from the aircraft, etc. As one example, a buffer time can be set to a predetermined amount of time prior to a scheduled arrival of an aircraft at the aircraft sand. The buffer can be set such that if a particular aircraft stand is required to be made available for receiving a particular flight a predetermined amount of time prior to arrival of the flight (e.g., 3 hours prior to the scheduled arrival of the flight), then the aircraft stand can be made unavailable to all other flight during the predetermined amount of time prior to arrival of the flight. As another example, a post-flight buffer time can be set to a predetermined amount of time after the flight arrives or is scheduled to arrive at the aircraft stand. The buffer can be set such that if a particular aircraft stand is required to be remain available for a particular flight for a predetermined amount of time after arrival of the flight (e.g., 1.5 hours after arrival of the flight), then the aircraft stand can be made unavailable to all other flight during the predetermined amount of time after arrival of the flight.

In some embodiments, the one or more scheduling constraints 258 can include rules or constraints associated with the ratio of contact stands to remote stands and/or may simply limit or constrain the number of remote stands available for use. As one example, the one or more scheduling constraints 258 received from airline operator can set the number of remote stands to no more than five (5) remote stands in use at any given time. As another example, the one or more scheduling constraints 258 received from airline operator can set the contact stand/remote stand ratio at a suitable number, such as e.g., 10 to 1 (10:1).

The one or more scheduling constraints 258 of the data 250 can also include a distance master. As will be explained herein, a stand recovery solver 230 (FIG. 3) of the one or more scheduler computing devices 212 can output an optimized stand recovery plan based at least in part on estimated walking times between aircraft stands for connecting passengers. Accordingly, the distance master can associate an estimated walking time (e.g., in minutes) between aircraft stands of an airport. Alternatively, the distance master can associate an estimated walking time between an arrival aircraft stand and a gate associated with a connecting or departure aircraft stand of an airport, or between gates of an airport.

For instance, FIG. 9 provides a table depicting a distance master 264 of the passenger connection information 256 for a particular airport. In FIG. 9, the Walk Time (minutes) between various aircraft stands of the airport of FIG. 1 is shown. In this example, the estimated walking connection time between Stand 1 and Stand 2 is ten (10) minutes, the estimated walking connection time between Stand 1 and Stand R is eight (8) minutes, the estimated walking connection time between Stand 1 and Stand *N* is twenty (20) minutes, the estimated walking connection time between Stand 2 and Stand R is eleven (11) minutes, the estimated walking connection time between Stand 2 and Stand N is fifteen (15) minutes, and the estimated walking connection time between Stand R and Stand *N* is twenty-eight (28) minutes. The distance master can be received from the airliner operators, e.g., the one or more airline operator computing devices 222, 224, 226, and/or the one or more airport computing devices 228 operated by the airport 100. In some embodiments, the estimated walking connection times can be stagnant numbers that do not change. In some embodiments, however, the estimated walking connection times are adjustable. That is, the estimated walking connection times can be adjusted or updated based at least in part on one or more input parameters, such as e.g., the estimated number of persons within the security portion of the airport, the estimated number of persons within a terminal of the airport in which the arrival and connecting gate/stands are located, and/or some other suitable input parameter. In this way, the estimated walking connections times have real time accuracy and are based on the actual conditions within the airport.

At (304), as depicted in FIG. 2, after receiving the data at (302), the method (300) includes processing the received data. For instance, in some embodiments, processing the received data includes cleaning up the received data. The one or more scheduler computing devices 212 can clean up the received data 250 to make the data 250 more digestible by the stand recovery solver 230 of the one or more scheduler computing devices 212. Cleaning up the data 250 can include aggregating, filtering, merging, appending, deduping, transforming, and data cleansing. For example, without limitation, data cleanup activities can include filtering out or removing flights not relating to or associated with the airport 100, transforming times into a desired format, and/or deduping or removing duplicate entries.

Further, in some embodiments, processing the received data at (304) includes formatting the received data. As noted above, the data 250 can be received from multiple sources. Formatting the received data 250 formats or allocates the received data into common data frames. Data mapping can be performed to connect the common portions of the data. As one example, data formatting activities can include combining or merging data received from the multiple sources into a digestible data format. Further, data formatting can include linking tail numbers of aircraft 110 to flights associated with the airport 100. For instance, as shown in FIG. 1, each aircraft 110 can have an associated tail number 114. Accordingly, during data formatting, the tail numbers 114 can be linked to various arriving and departing flights associated with the airport 100.

At (306), as depicted in FIG. 2, the method (300) includes generating a unique identifier for each flight. Particularly, at (306), the method (300) can include generating, by the one or more computing devices, a unique identifier associated with each flight of the plurality of flights associated with the airport based at least in part on the received data. For instance, the one or more scheduler computing devices 212 or some other computing devices of the computing system 210 can generate a unique identifier for each flight associated with the airport 100, e.g., based on the received data 250. The generated unique identifier can be numeric, alphanumeric, or a series of letters, for example. For instance, the unique identifier can include numbers and letters associated with the tail number, the time of flight (e.g., the departure time and/or arrival time), and the current scheduled aircraft stand. By generating a unique identifier for each flight, it is ensured that there are no duplicates in the data set and facilitates mapping of the flights to their respective associated aircraft stands. Moreover, as will be explained herein, the generated unique identifiers function as keys to link the data 250 to the generated stand recovery plan 232 generated by the stand recovery solver 212.

By way of example, FIG. 10 provides a table depicting unique identifiers 234 generated for a plurality of flights associated with the airport. Particularly, as depicted in FIG. 10, a unique identifier is generated for Flight 1, Flight 2, and so on up to Flight *N*. In this example, the unique identifier generated for Flight 1 includes, in serial order, 1) the airliner operator code (e.g., ABC); 2) the tail number of the aircraft associated with the flight (e.g., AOWMA); 3) the date of flight (e.g., 31/12/2020); 4) the time of flight (e.g., 11:00); and 5) the associated aircraft stand (e.g., Stand 1). Notably, the date of flight and the time of flight of the unique identifier are associated with the New/Date Time column, and if a new date/time is not applicable, such as is the case for Flight 2 and Flight *N*, then the date of flight and the time of flight of the unique identifier are associated with the Scheduled Date/Time column. Unique identifiers for Flight 2 and Flight *N* are generated in the same manner as the unique identifier was generated for Flight 1, except that the New/Date Time column is not applicable for these flights, and thus, the date and flight times for these two flights was pulled from the Scheduled Date/Time column.

At (308), as depicted in FIG. 2, the method (300) includes identifying one or more aircraft stand conflicts based at least in part on the received data. Particularly, in some embodiments at (308), the method (300) can include identifying, by the one or more computing devices, one or more aircraft stand conflicts based at least in part on the received data. An aircraft stand conflict is indicative of two or more flights being associated with one aircraft stand of the plurality of aircraft stands of the airport within a predetermined time period.

In some embodiments, identifying one or more aircraft stand conflicts based at least in part on the received data includes 1) mapping each unique identifier with its associated aircraft stand; and 2) determining whether two or more flights are associated with the aircraft stand within a predetermined time. For example, after generating a unique identifier at (306), the unique identifier can be mapped to its associated stand for a given predetermined time period. For instance, FIG. 11 provides a table depicting unique identifiers being mapped with their associated aircraft stands for respective time periods. As shown, the unique identifier associated with Flight 1 has been mapped to Stand 1 for a predetermined time period. Particularly, Flight 1 has been mapped via its generated unique identifier to Stand 1 from 09:30 to 12:30, which is a time period extending one and a half hours prior to and after the scheduled flight time of 11:00. Further, the unique identifier associated with Flight 2 has been mapped to Stand 1 for a predetermined time period. Specifically, Flight 2 has been mapped via its generated unique identifier to Stand 1 from 10:00 to 13:00, which is a time period extending one and a half hours prior to and after the scheduled flight time of 11:30. In addition, the unique identifier associated with Flight *N* has been mapped to Stand *N* for a predetermined time period. More specifically, Flight *N* has been mapped via its generated unique identifier to Stand *N* from 09:15 to 12:15, which is a time period extending one and a half hours prior to and after the scheduled flight time of 10:45. The time periods before and after the flight times can be set based at least in part on the received data 250, and more particularly, on the airline buffer times received as part of the scheduling constraints 258.

After mapping each unique identifier with its associated aircraft stand for the predetermined time period, the one or more scheduler computing devices 212 determine whether two or more flights are associated with the aircraft stand within a predetermined time period. Stated another way, the one or more scheduler computing devices 212 determine if more than one unique identifier is assigned/allocated to an aircraft stand within a predetermined time period. With reference to FIG. 11, in this example, the one or more scheduler computing devices 212 determine that there is an aircraft stand conflict, and more particularly, the one or more scheduler computing devices 212 determine that Stand 1 has an aircraft stand conflict. As shown, the times in which Flight 1 and Flight 2 have been allocated to Stand 1 overlap. Particularly, the allocated times overlap from 10:00 to 12:30, and thus, the one or more scheduler computing devices 212 identify Stand 1 as an aircraft stand conflict.

At (310), as depicted in FIG. 2, the method (300) includes determining, by the one or more computing devices, one or more available aircraft stands based at least in part on the received data. For instance, in some embodiments, determining the one or more available aircraft stands includes 1) determining a time slot in which an available aircraft stand is needed; and 2) determining which aircraft stands are available within the determined time slot (i.e., not allocated to a flight within that time period). The unique identifiers generated at (306) for each flight can be utilized to determine the one or more available aircraft stands.

By way of example, with reference again to FIG. 11, the one or more scheduler computing devices 212 can first determine the time slot in which an available aircraft stand is needed. In this example, Flight 1 and Flight 2 are assigned to Stand 1, and thus, one of them needs to be reassigned or reallocated to a different stand. In some embodiments, the one or more scheduler computing devices 212 can select one of the flights to reallocate to a different aircraft stand, and consequently, the time slot is determined as the predetermined time period associated with the flight selected to be reallocated. For instance, if Flight 2 is selected to be moved to a different stand (e.g., because the flight time occurs later in time than the flight time of Flight 1), then the time slot is selected or determined as 10:00 to 13:00. On the other hand, if Flight 1 is selected to be reallocated to a different stand, then the time slot is selected or determined as 9:30 to 12:30.

In some alternative embodiments, the one or more scheduler computing devices 212 can perform parallel analyses on Flight 1 and Flight 2 as it may be unclear which flight is best to reallocate to a different aircraft stand. Thus, in such embodiments, the one or more scheduler computing devices 212 can determine that the time slot is the predetermined time period associated with Flight 1 and the time slot associated with Flight 2. Thus, the one or more scheduler computing devices 212 can determine the time slot as 9:30 to 12:30 (e.g., for Flight 1) and 10:00 to 13:00 (e.g., for Flight 2).

Once the time slot in which an available aircraft stand is needed is determined, the one or more scheduler computing devices 212 determine which aircraft stands of the plurality of aircraft stands associated with the airport are available within the determined time slot. As shown in FIG. 11, Stand 2 does not have any allocated flights within the determined time slot. That is, Stand 2 is not allocated to any flights between 9:30 and 12:30 or between 10:00 and 13:00, and accordingly, in this example, Stand 2 is determined as an available aircraft stand as either Flight 1 or Flight 2 can be moved to Stand 2. Further, Stand R does not have any allocated flights within the determined time slot. That is, Stand R is not allocated to any flights between 9:30 and 12:30 or between 10:00 and 13:00, and accordingly, Stand R is determined as an available aircraft stand as either Flight 1 or Flight 2 can be moved to Stand R, which is a remote stand. Notably, Flight *N* is allocated to Stand *N* from 9:15 to 12:15, and thus, neither Flight 1 nor Flight 2 can be reallocated to Stand *N* as Stand *N* is not an available aircraft stand within the determined time slot.

At (312), as depicted in FIG. 2, the method (300) includes resolving the one or more identified aircraft stand conflicts. Particularly, at (312), the method (300) includes resolving, by the one or more computing devices, the identified aircraft stand conflict based at least in part on the received data and the one or more determined available aircraft stands. For instance, in some embodiments, the stand recovery solver 230 of the one or more scheduler computing devices 212 resolves the aircraft stand conflict by reassigning or reallocating a determined available aircraft stand to one or more of the flights associated with the identified aircraft stand conflict (i.e., a conflicting flight), e.g., so that only one flight remains assigned or allocated to the aircraft stand associated with the identified aircraft stand conflict. Notably, the stand recovery solver 230 of the one or more scheduler computing devices 212 can select one of the available aircraft stands to reallocate or reassign to a conflicting flight based at least in part on a plurality of scheduling constraints 258 received as part of data 250 and an objective function that seeks to minimize passenger walk time between aircraft stands. In this way, the identified aircraft stand conflict can be resolved and conflicting flights associated with aircraft stand conflicts can be reassigned or reallocated to optimal available aircraft stands.

In some embodiments, reallocating a determined available aircraft stand to one or more of the flights associated with the identified aircraft stand conflict, e.g., to ultimately resolve the aircraft stand conflict at (312), includes determining whether the available aircraft stands meet one or more scheduling constraints, e.g., scheduling constraints 258 received as part of data 250.

For instance, FIG. 12 provides a table depicting various example scheduling constraints that can be considered in selecting an optimal aircraft stand to reallocate to a conflicting flight associated with the aircraft stand conflict. It will be appreciated that FIG. 12 depicts example scheduling constraints and that more or less scheduling constraints than those shown in FIG. 12 can be considered by the stand recovery solver 230 in selecting an available aircraft stand.

As depicted in FIG. 12, a first scheduling constraint can be to minimize churn, or a churn constraint. That is, to minimize disruptions, only flights associated with identified aircraft stand conflicts (i.e., conflicting flights) are reallocated or reassigned to available aircraft stands. Stated differently, flights and aircraft stands not associated with an identified aircraft stand conflict are ignored or not considered as available for reallocation.

A second scheduling constraint can include maintaining or not exceeding a contact/remote stand ratio constraint set by the airline operator. For instance, the one or more scheduling constraints 258 received as part of the data 250 can include a contact/remote stand ratio set by the airline operator. The contact/remote aircraft stand ratio can be set at 10 to 1 (10:1), for example. In such embodiments, the available aircraft stand selected must be selected such that the 10:1 ratio is not exceeded, e.g., by a ratio of 10 to 2 (10:2).

A third scheduling constraint can include maintaining or not exceeding a remote stand limit constraint set by the airline operator. For instance, the one or more scheduling constraints 258 received as part of the data 250 can include a remote stand limit set by the airline operator. The remote aircraft stand limit can be set at 10 remote stands, for example. In such embodiments, the available aircraft stand selected must be selected such that the aircraft stand limit is not exceeded.

A fourth scheduling constraint can include a remote stand weather limitation constraint set by the airline operator. For instance, the one or more scheduling constraints 258 received as part of the data 250 can include a remote stand weather limitation set by the airline operator. The remote aircraft stand weather limitation can include various limitations or settings that prevent the selection of remote stands. For example, the remote aircraft stand weather limitation can include a low temperature threshold, a high temperature threshold, a rain limitation, a snow limitation, etc. For example, if the outdoor temperature of the outdoor environment 106 (FIG. 1) exceeds or falls below the low temperature threshold, none of the remote stands are selected for reallocation. As another example, if the outdoor temperature of the outdoor environment 106 (FIG. 1) exceeds or goes above the high temperature threshold, none of the remote stands are selected for reallocation. As yet another example, if it is raining/snowing in the outdoor environment 106 (FIG. 1), then none of the remote stands are selected for reallocation.

A fifth scheduling constraint can include an aircraft stand/aircraft type compatibility constraint. For instance, the one or more scheduling constraints 258 received as part of the data 250 can include the stand compatibility master 262 (FIG. 8) that associates compatibility between certain aircraft stands and certain aircraft operated by the airline operator. Based on the unique identifiers of the flights associated with the conflicting flights, aircraft stands that are compatible with the aircraft type of aircraft associated with the conflicting flights can be determined. If the aircraft stand is not compatible, then the aircraft stand is discarded and not selected for reallocation. On the other hand, if a particular aircraft stand is found to be compatible with the aircraft type of the aircraft associated with one of the conflicting flights, then the aircraft stand is noted or marked as a possible aircraft stand that can be selected for reallocation.

A sixth scheduling constraint can include aircraft stand priority rules constraint. For instance, the one or more scheduling constraints 258 received as part of the data 250 can include one or more aircraft stand priority rules. For instance, certain flights or tail numbers can be granted priority to certain aircraft stands over other flights. As one example, the scheduling constraints 258 can be set such that a given flight or tail number has priority for Stand 2 of FIG. 1 over all other flights. As another example, the aircraft stand priority rules can be set such that one or more flights have exclusivity to certain aircraft stands. An airline operator can also grant certain aircraft types priority or exclusivity to certain aircraft stands.

A seventh scheduling constraint can include aircraft stand security rules constraint. For instance, the one or more scheduling constraints 258 received as part of the data 250 can include one or more aircraft stand security rules. For instance, certain flights can be granted priority to certain aircraft stands over other flights based on security needs. As one example, if the destination of a conflicting flight is to a country or area that requires passengers to be checked through a predetermined level of security, aircraft stands that require passengers to pass through security measures having the predetermined level of security are noted or marked as possible aircraft stands that can be selected for reallocation. On the other hand, if the aircraft stand does not require the same or higher level of security than the required predetermined level of security, then the aircraft stand is discarded and not selected as a possible aircraft stand for reallocation.

An eight scheduling constraint can include flagship flight rules constraint. For instance, the one or more scheduling constraints 258 received as part of the data 250 can include one or more flagship flight rules. For instance, certain flights can be deemed "flagship flights." Such flagship flights can enjoy certain benefits and advantages over other flights. For example, a flagship flight rule associated with a flight can be set such that the flagship flight is only assigned to certain aircraft stands, only to contact stands, etc.

Accordingly, resolving, by the one or more computing devices, the identified aircraft stand conflict based at least in part on the received data and the one or more determined available aircraft stands includes determining, by the one or more computing devices, whether the one or more available aircraft stands meet the one or more scheduling constraints (e.g., the first, second, third, and so scheduling constraints of FIG. 12), and wherein the selected aircraft stand for reallocation is selected only if the aircraft stand is determined to meet the one or more scheduling constraints.

After the stand recovery solver 230 of the one or more scheduler computing devices 212 determines possible aircraft stands for reallocation from the list of available aircraft stands determined at (310), one of the possible aircraft stands for reallocation is selected based at least in part on an objective function that seeks to minimize passenger walk times between aircraft stands as well as prioritize passengers with shorter connecting times between flights. Accordingly, in some embodiments, resolving, by the one or more computing devices, the identified aircraft stand conflict based at least in part on the received data and the one or more determined available aircraft stands includes 1) determining, by the one or more computing devices, a weighted total walk time for passengers associated with one of the flights of the two or more flights associated with the aircraft stand conflict having a connecting flight to walk from an arrival stand to a possible departure stand selected as one of the determined one or more available aircraft stands; and 2) selecting the aircraft stand of the one or more determined available aircraft stands based at least in part on the determined weighted total walk time.

In some embodiments, the weighted total walk time is defined by:

$$T_{Walk} = \sum_{PAX_N} w_{ij} * F_{ai} * F_{bj} * wt(CT_{ab})$$

(Equation 1)

wherein $T_{Walk}$ is the weighted total walk time, $\sum PAX_N$ represents that a weighted walk time is calculated for each passenger onboard or scheduled to board one of the conflicting flights associated with the aircraft stand conflict and then summed, $w_{ij}$ is an estimated walk time between an arrival stand *i* and a departure stand *j*, wherein the arrival stand *i* and/or the departure stand *j* are selected as one of the determined one or more possible available aircraft stands depending on which flight of the passengers connecting flights needs to be reallocated or reassigned to a different stand, $F_{ai}$ is a variable set at one (1) if the flight is assigned to the arrival stand *i* and zero (0) otherwise, $F_{bj}$ is a variable set at one (1) if the flight is assigned to the departure stand *j* and zero (0) otherwise, and $wt(CT_{ab})$ is a weighted decay function associated with a connection time between flights, wherein $(CT_{ab})$ is the connecting time between flights and *wt* is a variable weight assigned to the connecting time based at least in part on the connecting time, and wherein the decay function is set such that passengers with less connection time are prioritized over passengers with more connection time. That is, the weight *wt* is set or is variable based at least in part on the connecting time between flights. Thus, in accordance with Equation 1, the weighted sum of the distance/time the passengers are required to walk between connecting flights is minimized and passengers with a higher risk of missing their connecting flights are prioritized. The estimated walk time $w_{ij}$ between the arrival stand *i* and the departure stand *j* can be determined or pulled from the distance master 264 (e.g., FIG. 9) that associates the walk time between stands of the airport. Further, the connection time between flights can be pulled from the unique identifier of a particular flights or flights or from the flight recovery plan 252 (FIG. 4).

The weighted total walk time $T_{Walk}$ is determined for a plurality of aircraft stand combinations as a summation of the walk time between the arrival stand *i* and the departure stand *j* multiplied by the decay function $wt(CT_{ab})$ that utilizes the connection time between flights for each passenger associated with one or more of the two or more flights associated with the aircraft stand conflict. For example, FIG. 13 provides a schematic view of a plurality of aircraft stands of an airport. Particularly, a plurality of available arrival stands are depicted, including Arrival Stand 1, Arrival Stand 2, Arrival Stand 3, and Arrival Stand 4. A plurality of departure stands are also shown, including Departure Stand 1, Departure Stand 2, and Departure Stand 3. In this example, Flight 1 and Flight 2 are each scheduled to arrive at Arrival Stand 1 within the same time period, and thus, an aircraft stand conflict is identified by the one or more computing devices and one of the flights must be reallocated to another aircraft stand, such as e.g., Arrival Stand 2, Arrival Stand 3, etc.

The one or more computing devices can first determine the weighted total walk time $T_{Walk}$ for the connecting passengers of Flight 2. In this example, one or more passengers onboard Flight 2 can be scheduled to connect with a flight scheduled to depart from Departure Stand 1, one or more passengers onboard Flight 2 can be scheduled to connect with a flight scheduled to depart from Departure Stand 2, and one or more passengers onboard Flight 2 can be scheduled to connect with a flight scheduled to depart from Departure Stand 3.

For one aircraft stand combination, available Arrival Stand 2 can be selected as the potential arrival stand *i* in determining the weighted total walk time $T_{Walk}$ and the departure stand *j* can be selected as one of the departure stands, including Departure Stand 1, Departure Stand 2, or Departure Stand 3, depending on the scheduled connecting flight of the passenger. By way of example, the one or more computing devices can first determine whether Arrival Stand 2 is a potential candidate for reallocating Flight 2 thereto.

First, the one or more computing devices determine the weighted total walk time $T_{Walk}$ using Equation 1 with the arrival stand *i* selected as Arrival Stand 2 and the departure stand *j* selected as Departure Stand 1. That is, the estimated walk time $w_{ij}$ between arrival stand *i* (Arrival Stand 2) and departure stand *j* (Departure Stand 1) is multiplied by the decay function $wt(CT_{ab})$, and then multiplied by the number of passengers connecting with the flight scheduled to depart from Departure Stand 1. Notably, in performing this calculation, values are generated only for the one or more passengers onboard Flight 2 scheduled to connect with a flight departing from Departure Stand 1.

Second, the one or more computing devices determine the weighted total walk time $T_{Walk}$ using Equation 1 with the arrival stand *i* selected as Arrival Stand 2 and the departure stand *j* selected as Departure Stand 2. That is, the estimated walk time $w_{ij}$ between arrival stand *i* (Arrival Stand 2) and departure stand *j* (Departure Stand 2) is multiplied by the decay function $wt(CT_{ab})$, and then multiplied by the number of passengers connecting with the flight scheduled to depart from Departure Stand 2. Notably, in performing this calculation, values are generated only for the one or more passengers onboard Flight 2 scheduled to connect with a flight departing from Departure Stand 2.

Third, the one or more computing devices determine the weighted total walk time $T_{Walk}$ using Equation 1 with the arrival stand *i* selected as Arrival Stand 2 and the departure stand *j* selected as Departure Stand 3. That is, the estimated walk time $w_{ij}$ between arrival stand *i* (Arrival Stand 2) and departure stand *j* (Departure Stand 3) is multiplied by the decay function $wt(CT_{ab})$, and then multiplied by the number of passengers connecting with the flight scheduled to depart from Departure Stand 3. Notably, in performing this calculation, values are generated only for the one or more passengers onboard Flight 2 scheduled to connect with a flight departing from Departure Stand 3.

Then, the weighted total walk times $T_{Walk}$, or sub weighted walk time values, are summed to yield or render the weighted total walk times $T_{Walk}$. That is, the sub weighted total walk time $T_{Walk}$ for passengers potentially moving between Arrival Stand 2 and Departure Stand 1, the sub weighted total walk time $T_{Walk}$ for passengers potentially moving between Arrival Stand 2 and Departure Stand 2, and the sub weighted total walk time $T_{Walk}$ for passengers potentially moving between Arrival Stand 2 and Departure Stand 3 are summed together to render the weighted total walk time $T_{Walk}$. This determined weighted total walk time $T_{Walk}$ is then stored in one or more memory devices (e.g., of the one or more scheduler devices 212) and is compared to other weighted total walk time $T_{Walk}$ calculated for other stand combinations.

After calculating the weighted total walk time $T_{Walk}$ for the potential reallocation stand Arrival Stand 2, the same process noted above can be performed for each determined available arrival stand, e.g., Arrival Stand 3, Arrival Stand 4, etc. Moreover, the same process can be performed for Flight 1. Then, the weighted total walk times $T_{Walk}$ calculated for each stand combination can be compared and one of the aircraft stands can be selected for reallocation. For instance, the aircraft stand with the smallest weighted total walk time $T_{Walk}$ can be selected as the aircraft stand for reallocation. As such, the optimal aircraft stand is reallocated or reassigned to one of the flights associated with the identified aircraft stand conflict (i.e., a conflicting flight).

At (314), as depicted in FIG. 2, the method (300) includes generating a stand recovery plan. Particularly, at (314), the method (300) can include generating, by the one or more computing devices, a stand recovery plan based at least in part on the resolved aircraft stand conflict. For instance, as shown in FIG. 3, the stand recovery solver 230 of the scheduler computing devices 212 can output or generate the stand recovery plan 232. The generated stand recovery plan 232 can then be routed or sent to other computing devices of the computing system 210, including the one or more computing devices 214, 216, 218, 220, 222, 224, 226, 228 of the computing system 210 of the SRS system 200. Moreover, as shown in FIG. 3, the stand recovery plan 232 can be routed to the flight scheduling solver 240, e.g., executed or running on one or more computing devices. In this way, feedback on the viability of the flight recovery plan 252 can be provided.

Notably, the generated stand recovery plan 232 can resolve all of the identified aircraft stand conflicts. For example, FIG. 14 provides an example generated stand recovery plan 232. As depicted, the generated stand recovery plan 232 has resolved the identified aircraft stand conflict between conflicting Flight 1 and Flight 2. Specifically, as shown in the New Aircraft Stand column and the New Gate column in the plan 232, Stand 2 and its associated Gate 2 have been reallocated to Flight 2, and thus, Flight 2 will now arrive at the airport and be parked at Stand 2 instead of Stand 1. Further, as depicted, Stand 1 remains allocated to Flight 1 and Stand *N* remains allocated to Flight *N*.

Stand 2 can be selected for reallocation for Flight 2 as set forth herein. For instance, once the aircraft stand conflict is identified (e.g., at (308)), the one or more computing devices can determine one or more available aircraft stands that are available within a determined time slot (e.g., at (310)). Then, once the one or more available aircraft stands are determined, the one or more computing devices can resolve the aircraft stand conflict (e.g., at (312)). For instance, in resolving the aircraft stand conflict, the one or more computing devices can first determine which of the available aircraft stands meet one or more scheduling constraints. Second, the one or more computing devices can determine, for one or more of the conflicting flights associated with the aircraft stand conflict, a weighted total walk time for the connecting passengers onboard the particular flight. The flight with the weighted total walk time that minimize the distance/time passengers need to walk between stands can be selected while prioritizing or ensuring that each passenger can make his/her connecting flight. As noted above, the stand recovery plan 232 can be generated (e.g., at (314)) based at least in part on the reallocated aircraft stands, and the stand recovery plan 232 can be sent, pushed, or otherwise communicated to various computing devices associated with various entities. FIG. 15 provides a table depicting unique identifiers being mapped with their associated aircraft stands in accordance with the generated stand recovery plan 232. As shown, the identified aircraft stand between conflicting Flight 1 and Flight 2 has been resolved as Flight 2 has now been mapped via its unique identifier to Stand 2. As will be appreciated, each identified conflict stand can be resolved by the generated stand recovery plan 232.

FIG. 16 provides an example computing system 500 according to example embodiments of the present disclosure. The one or more computing devices 212, 214, 216, 218, 220, 222, 224, 226, 228 of the computing system 210 described herein can include various components and perform various functions of the one or more computing devices of the computing system 500 described below, for example.

As shown in FIG. 16, the computing system 500 can include one or more computing device(s) 510. The computing device(s) 510 can include one or more processor(s) 510A and one or more memory device(s) 510B. The one or more processor(s) 510A can include any suitable processing device, such as a microprocessor, microcontroller, integrated circuit, logic device, and/or other suitable processing device. The one or more memory device(s) 510B can include one or more computer-readable media, including, but not limited to, non-transitory computer-readable media, RAM, ROM, hard drives, flash drives, and/or other memory devices.

The one or more memory device(s) 510B can store information accessible by the one or more processor(s) 510A, including computer-readable instructions 510C that can be executed by the one or more processor(s) 510A. The instructions 510C can be any set of instructions that when executed by the one or more processor(s) 510A, cause the one or more processor(s) 510A to perform operations. In some embodiments, the instructions 510C can be executed by the one or more processor(s) 510A to cause the one or more processor(s) 510A to perform operations, such as any of the operations and functions for which the computing system 500 and/or the computing device(s) 510 are configured, such as e.g., operations for generating a stand recovery plan described herein. For instance, the method (300) can be implemented in whole or in part by the computing system 500. Accordingly, the method (300) can be at least partially a computer-implemented method such that at least some of the steps of the method (300) are performed by one or more computing devices, such as the exemplary computing device(s) 510 of the computing system 500. The instructions 510C can be software written in any suitable programming language or can be implemented in hardware. Additionally, and/or alternatively, the instructions 510C can be executed in logically and/or virtually separate threads on processor(s) 510A. The memory device(s) 510B can further store data 510D that can be accessed by the processor(s) 510A. For example, the data 510D can include models, databases, etc.

The computing device(s) 510 can also include a network interface 510E used to communicate, for example, with the other components of system 500 (e.g., via a network). The network interface 510E can include any suitable components for interfacing with one or more network(s), including for example, transmitters, receivers, ports, controllers, antennas, and/or other suitable components. One or more external devices can be configured to receive one or more commands or data from the computing device(s) 510 or provide one or more commands or data to the computing device(s) 510.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for determining a stand recovery plan that allocates a plurality of aircraft stands with a plurality of flights, the method comprising:

    receiving, by one or more computing devices, data indicative of a flight plan, a current stand plan, passenger connection information, and one or more scheduling constraints associated with the plurality of aircraft stands;
    identifying, by the one or more computing devices, an aircraft stand conflict based at least in part on the received data, wherein the aircraft stand conflict is indicative of two or more flights of the plurality of flights being associated with one aircraft stand of the plurality of aircraft stands within a time period;
    determining, by the one or more computing devices, one or more available aircraft stands selected from the plurality of aircraft stands based at least in part on the received data;
    determining, by the one or more computing devices, a weighted total walk time for a plurality of aircraft stand combinations each having an arrival stand and a departure stand, wherein the weighted total walk time is determined for each of the plurality of aircraft stand combinations based at least in part on a walk time between the arrival stand and the departure stand and a decay function that utilizes a connection time between flights for each passenger associated with one or more of the two or more flights associated with the aircraft stand conflict;
    reallocating, by the one or more computing devices, one of the one or more available aircraft stands to one of the two or more flights associated with the aircraft stand conflict based at least in part on the determined weighted total walk time; and
    generating, by the one or more computing devices, the stand recovery plan based at least in part on the reallocated aircraft stand.

2. The method of claim 1, wherein the weighted total walk time is determined for each of the plurality of aircraft stand combinations as a summation of the walk time between the arrival stand and the departure stand multiplied by the decay function that utilizes the connection time between flights for each passenger associated with one or more of the two or more flights associated with the aircraft stand conflict.

3. The method of claim 1 or 2, wherein reallocating, by the one or more computing devices, one of the one or more available aircraft stands to one of the two or more flights associated with the aircraft stand conflict based at least in part on the determined weighted total walk time comprises reallocating the available aircraft stand associated with the smallest determined weighted total walk time.

4. The method of and of claims 1 to 3, wherein the weighted total walk time is defined by: $T_{Walk} = \Sigma_{PAX_N} w_{ij} F_{ai} F_{bj} wt(CT_{ab})$, wherein $T_{Walk}$ is the weighted total walk time, $PAX_N$ is a number of passengers associated with one of the flights of the two or more flights associated with the aircraft stand conflict, $w_{ij}$ is the walk time between the arrival stand *i* and the departure stand *j*, wherein one of the arrival stand *i* and the departure stand *j* is selected from the one or more determined available aircraft stands, $F_{ai}$ is a variable set at one (1) if the flight is assigned to the arrival stand *i* and zero (0) otherwise, $F_{bj}$ is a variable set at one (1) if the flight is assigned to the departure stand *j* and zero (0) otherwise, and $wt(CT_{ab})$ is the decay function associated with the connection time between flights for connecting passengers, wherein the decay function is set such that passengers with less connection time are prioritized over passengers with more connection time.

5. The method of any of claims 1 to 4, further comprising:

    determining, by the one or more computing devices, whether the one or more available aircraft stands selected from the plurality of aircraft stands meet the one or more scheduling constraints, and
    wherein the one or more computing devices only determine the weighted total walk time for the available aircraft stands that meet the one or more scheduling constraints.

6. The method of claim 5, wherein the one or more scheduling constraints include at least one of a churn minimizing constraint, a contact/remote stand ratio constraint, a remote stand limit constraint, an aircraft/stand compatibility constraint, an aircraft stand priority rules constraint, an aircraft stand security rules constraint, and a flagship flight constraint.

7. The method of any of claims 1 to 6, further comprising:
generating, by the one or more computing devices, a unique identifier for the plurality of flights based at least in part on the received data, wherein the unique identifier is indicative of the aircraft stand associated with the flight and a time of flight.

8. The method of claim 7, wherein the one or more available aircraft stands are determined, by the one or more computing devices, based at least in part on the generated unique identifiers.

9. The method of any of claims 1 to 8, further comprising:
routing, by the one or more computing devices, the generated stand recovery plan to a flight scheduling solver.

10. A system, comprising:
one or more computing devices having one or more memory devices and one or more processing devices, the one or more memory devices storing computer-readable instructions that can be executed by the one or more processing devices to perform operations, in performing the operations, the one or more processing devices are configured to:

receive data indicative of a current stand plan, a flight plan, passenger connection information, and one or more scheduling constraints associated with a plurality of aircraft stands;
identify an aircraft stand conflict based at least in part on the received data, wherein the aircraft stand conflict is indicative of two or more flights being associated with one aircraft stand of the plurality of aircraft stands within a time period;
determine one or more available aircraft stands based at least in part on the received data;
resolve the identified aircraft stand conflict based at least in part on the received data and the one or more determined available aircraft stands, wherein resolving the identified aircraft stand comprises i) determining whether the one or more available aircraft stands meet the one or more scheduling constraints; ii) determining a weighted total walk time; and iii) and reallocating one of the available aircraft stands that meets the one or more scheduling constraints to one of the flights associated with the identified aircraft stand conflict based at least in part on the determined weighted total walk time; and
generate a stand recovery plan based at least in part on the resolved aircraft stand conflict.

11. The system of claim 10, wherein in determining the one or more available aircraft stands based at least in part on the received data, the one or more processing devices are configured to:

determine a time slot in which an available aircraft stand is needed; and
determine which aircraft stands of the plurality of aircraft stands are available within the determined time slot.

12. The system of claim 11, wherein the one or more processing devices are further configured to:

generate, by the one or more computing devices, a unique identifier for each of the plurality of flights based at least in part on the received data, wherein the unique identifier is indicative of the aircraft stand associated with the flight and a time of flight, and
wherein the one or more available aircraft stands are determined, by the one or more computing devices, based at least in part on the generated unique identifiers.

13. The system of any of claims 10 to 12, wherein the one or more processing devices are further configured to:
generate, by the one or more computing devices, a unique identifier for each of the plurality of flights based at least in part on the received data, wherein the unique identifier is indicative of the aircraft stand associated with the flight and a time of flight, and
wherein in identifying the one or more aircraft stand conflicts based at least in part on the received data, the one or more processing devices are further configured to:

map each of the unique identifiers with their associated one of the plurality of aircraft stands; and
determine whether two or more of the plurality of flights are associated with one of the plurality of aircraft stands within the time period based on the mapped unique identifiers.

14. The system of any of claims 10 to 13, wherein in determining the weighted total walk time, the one or more processing devices are configured to:
calculate the weighted total walk time for a plurality of aircraft stand combinations each having an arrival stand and a departure stand, wherein the weighted total walk time is determined for each of the plurality of aircraft stand combinations based at least in part on a walk time between the arrival stand and the departure stand and a decay function that utilizes a connection time between flights for each passenger associated with one or more of the two or more flights associated with the aircraft stand conflict.

15. The system of claim 14, wherein the determined weighted total walk time is defined by: $T_{Walk} = \sum_{PAX_N} w_{ij} F_{ai} F_{bj} wt(CT_{ab})$, wherein $T_{Walk}$ is the weighted total walk time, $PAX_N$ is a number of passengers associated with one of the flights of the two or more flights associated with the aircraft stand conflict, $w_{ij}$ is the walk time between the arrival stand $i$ and the departure stand $j$, wherein one of the arrival stand $i$ and the departure stand $j$ is selected from the one or more determined available aircraft stands, $F_{ai}$ is a variable set at one (1) if the flight is assigned to the arrival stand $i$ and zero (0) otherwise, $F_{bj}$ is a variable set at one (1) if the flight is assigned to the departure stand $j$ and zero (0) otherwise, and $wt(CT_{ab})$ is the decay function associated with the connection time between flights for connecting passengers, wherein the decay function is set such that passengers with less connection time are prioritized over passengers with more connection time.

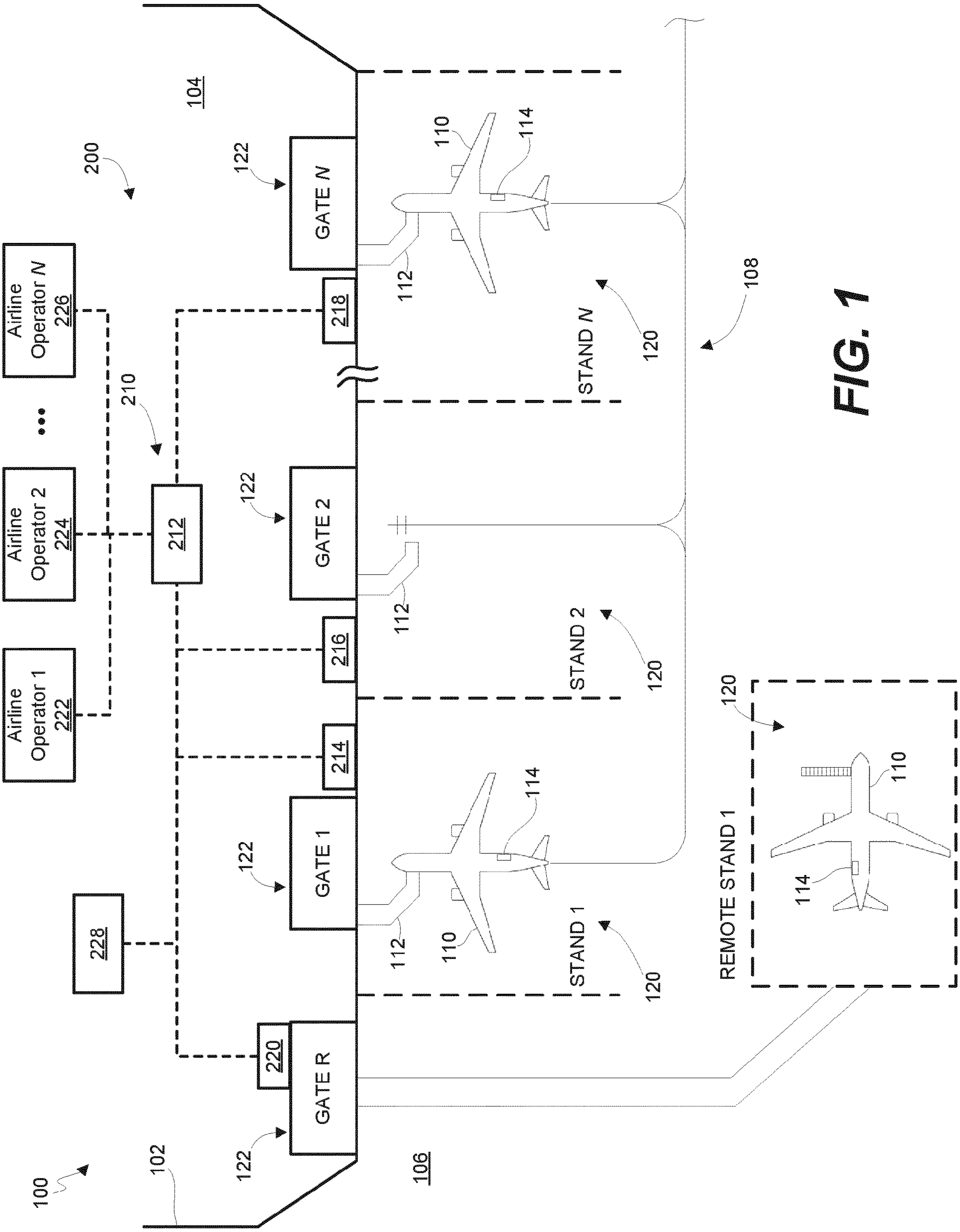
100
102
104
106
108
110
112
114
120
122
200
210
212
214
216
218
220
228
Airline Operator 1 222
Airline Operator 2 224
Airline Operator N 226
GATE R
GATE 1
GATE 2
GATE N
STAND 1
STAND 2
STAND N
REMOTE STAND 1

FIG. 1

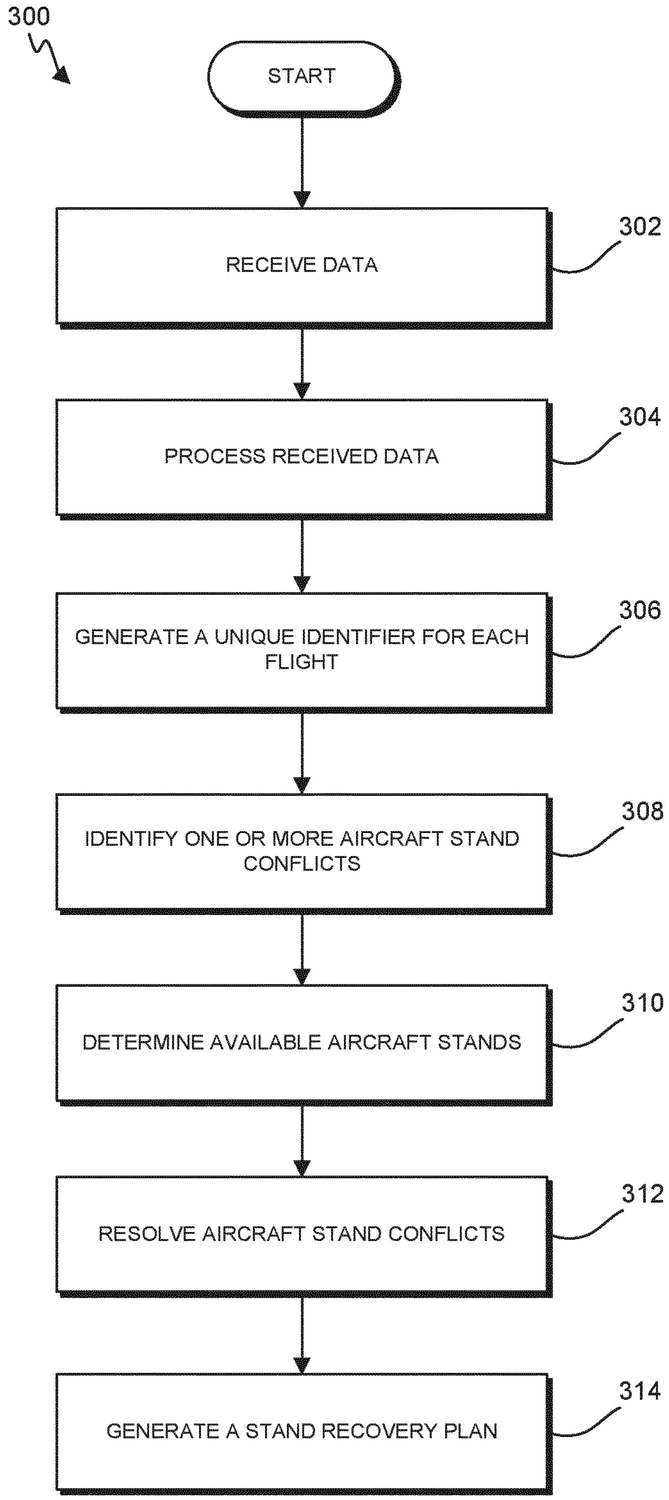
300
START
RECEIVE DATA
302
PROCESS RECEIVED DATA
304
GENERATE A UNIQUE IDENTIFIER FOR EACH FLIGHT
306
IDENTIFY ONE OR MORE AIRCRAFT STAND CONFLICTS
308
DETERMINE AVAILABLE AIRCRAFT STANDS
310
RESOLVE AIRCRAFT STAND CONFLICTS
312
GENERATE A STAND RECOVERY PLAN
314

FIG. 2

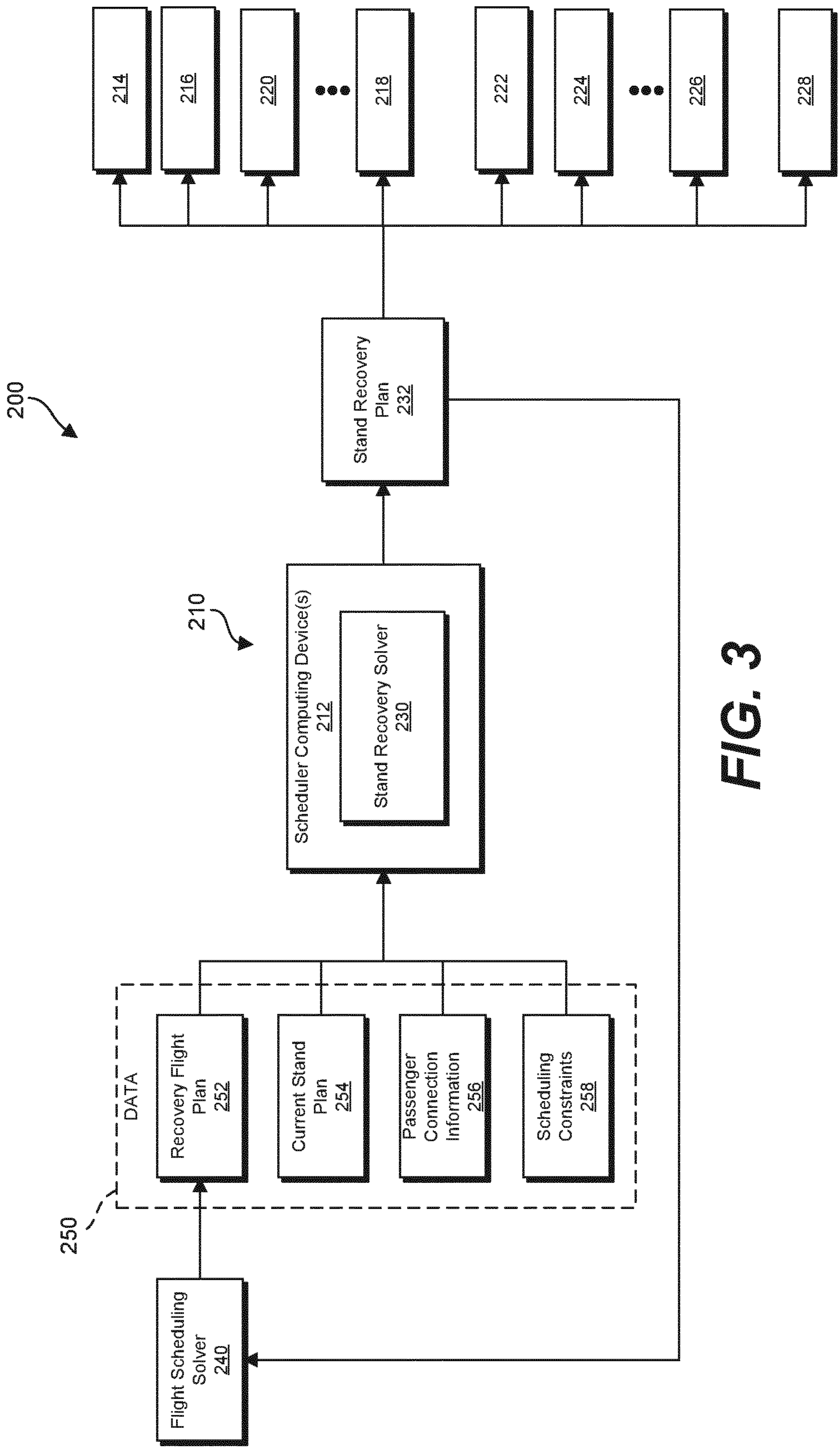
200
214
216
220
218
222
224
226
228
Stand Recovery Plan 232
210
Scheduler Computing Device(s) 212
Stand Recovery Solver 230
DATA
250
Recovery Flight Plan 252
Current Stand Plan 254
Passenger Connection Information 256
Scheduling Constraints 258
Flight Scheduling Solver 240

FIG. 3

252

Flight Recovery Plan

| | Airline Operator | Flight Number | A/D | Scheduled Date/Time | New Date/Time | Aircraft Type | Tail Number | Origin | Destination |
|---|---|---|---|---|---|---|---|---|---|
| **Flight 1** | ABC | ABC0001 | A | 31/12/2020 05:05 | 31/12/2020 11:00 | B777 | A0WMA | BRU | DXB |
| **Flight 2** | ABC | ABC0002 | A | 31/12/2020 11:30 | N/A | B777 | A0WDR | NYC | DXB |
| | | | | | | | | | |
| **Flight *N*** | ABC | ABC0003 | D | 31/12/2020 10:45 | N/A | B777 | A0WPA | DXB | JNB |

***FIG. 4***

254

Current Stand Plan

| | Airline Operator | Flight Number | A/D | Scheduled Date/Time | Aircraft Stand | Gate |
|---|---|---|---|---|---|---|
| **Flight 1** | ABC | ABC0001 | A | 31/12/2020 05:05 | Stand 1 | Gate 1 |
| **Flight 2** | ABC | ABC0002 | A | 31/12/2020 11:30 | Stand 1 | Gate 1 |
| | | | | | | |
| **Flight *N*** | ABC | ABC0003 | D | 31/12/2020 10:45 | Stand *N* | Gate *N* |

***FIG. 5***

Flight 1

256

| | Connecting Flight | Arriving Gate | Arrival Flight Number | Connecting Flight Number |
|---|---|---|---|---|
| **Passenger 1** | N | Gate 1 | ABC0001 | N/A |
| **Passenger 2** | Y | Gate 1 | ABC0001 | ABC0008 |
| **Passenger 3** | Y | Gate 1 | ABC0001 | ABC0009 |
| **Passenger 4** | N | Gate 1 | ABC0001 | N/A |
| | | | | |
| **Passenger *N*** | N | Gate 1 | ABC0001 | N/A |

*FIG. 6*

Stand Master

260

| | Airport | Terminal | Concourse | Stand Family | Zone |
|---|---|---|---|---|---|
| **Stand 1** | DXB | T2 | Contact | E | 1 |
| **Stand 2** | DXB | T2 | Contact | E | 1 |
| **Stand R** | DXB | T2 | Remote | E | 1 |
| | | | | | |
| **Stand *N*** | DXB | T2 | Contact | E | 2 |

*FIG. 7*

Stand Compatibility

262

| | Aircraft Types | | | | | | | | |
|---|---|---|---|---|---|---|---|---|---|
| | A319 | A340300 | A340500 | A380 | B777200F | B7772LR | B777300 | B7773ER | Security |
| **Stand 1** | 0 | 1 | 1 | 1 | 0 | 1 | 1 | 1 | Y |
| **Stand 2** | 0 | 1 | 1 | 1 | 0 | 1 | 1 | 1 | Y |
| **Stand R** | 0 | 1 | 1 | 1 | 0 | 1 | 1 | 1 | Y |
| | | | | | | | | | |
| **Stand *N*** | 0 | 1 | 1 | 1 | 0 | 1 | 1 | 1 | Y |

*FIG. 8*

Distance Master

264

| Arrival Stand | Departure Stand | Walk Time (min) |
|---|---|---|
| Stand 1 | Stand 2 | 10 |
| Stand 1 | Stand R | 8 |
| Stand 1 | Stand *N* | 20 |
| Stand 2 | Stand 1 | 10 |
| Stand 2 | Stand R | 11 |
| Stand 2 | Stand *N* | 15 |
| Stand R | Stand 1 | 8 |
| Stand R | Stand 2 | 11 |
| Stand R | Stand *N* | 28 |

*FIG. 9*

234

| | Airline Operator | Flight Number | A/D | Scheduled Date/Time | New Date/Time | Aircraft Stand | Gate | Tail Number | Unique Identifiers |
|---|---|---|---|---|---|---|---|---|---|
| **Flight 1** | ABC | ABC0001 | A | 31/12/2020 05:05 | 31/12/2020 11:00 | Stand 1 | Gate 1 | A0WMA | ABC_A0WMA_31/12/2020_11:00_Stand1 |
| **Flight 2** | ABC | ABC0002 | A | 31/12/2020 11:30 | N/A | Stand 1 | Gate 1 | A0WDR | ABC_A0WDR_31/12/2020_11:30_Stand1 |
| | | | | | | | | | |
| **Flight *N*** | ABC | ABC0003 | D | 31/12/2020 10:45 | N/A | Stand *N* | Gate *N* | A0WPA | ABC_A0WMA_31/12/2020_10:45_Stand*N* |

*FIG. 10*

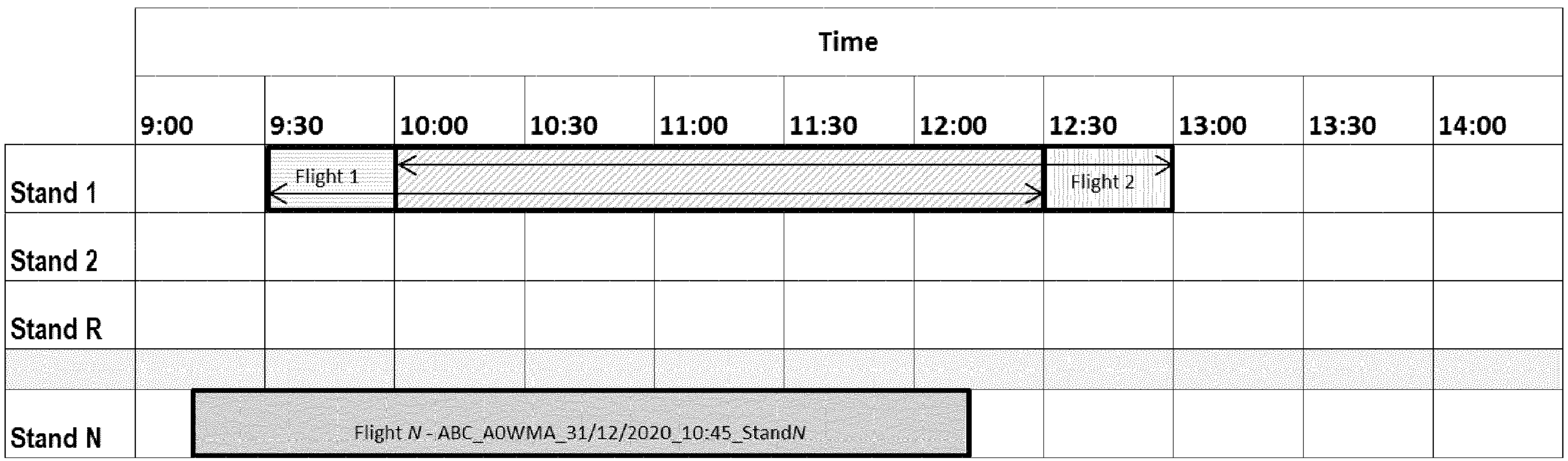


*FIG. 11*

| | Scheduling Constraints |
|---|---|
| 1 | Minimize Churn |
| 2 | Contact/Remote Stand Ratio |
| 3 | Remote Stand Limit |
| 4 | Remote Stand - Weather Limitations |
| 5 | Aircraft/Stand Compatibility |
| 6 | Aircraft Stand Priority Rules |
| 7 | Aircraft Stand Security Rules |
| 8 | Flagship Flights Rules |

*FIG. 12*

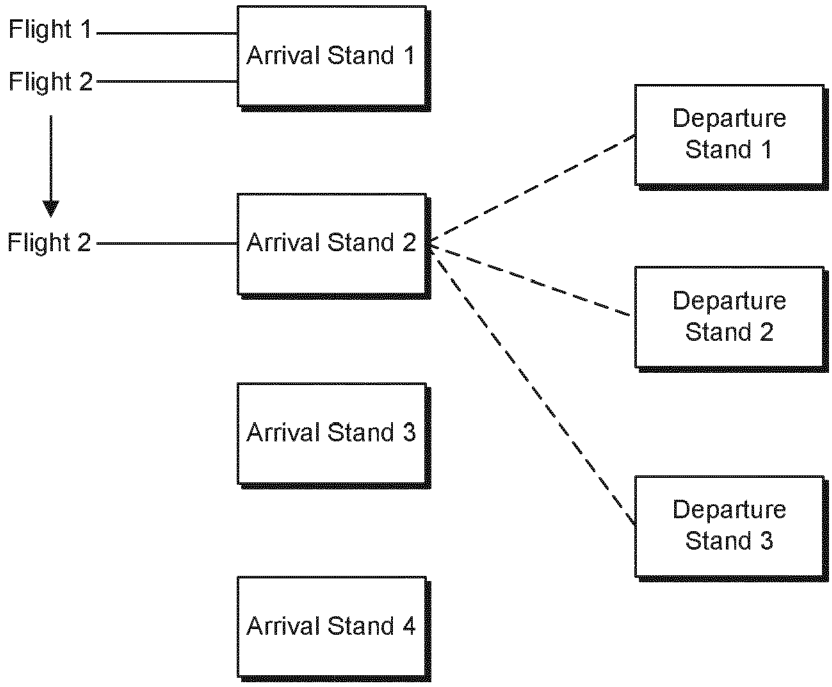
Flight 1
Flight 2
Arrival Stand 1
Flight 2
Arrival Stand 2
Arrival Stand 3
Arrival Stand 4
Departure Stand 1
Departure Stand 2
Departure Stand 3

FIG. 13

Stand Recovery Plan

232

| | Airline Operator | Flight Number | A/D | Scheduled Date/Time | Aircraft Stand | New Aircraft Stand | Gate | New Gate |
|---|---|---|---|---|---|---|---|---|
| **Flight 1** | ABC | ABC0001 | A | 31/12/2020 11:00 | Stand 1 | N/A | Gate 1 | N/A |
| **Flight 2** | ABC | ABC0002 | A | 31/12/2020 11:30 | Stand 1 | Stand 2 | Gate 1 | Gate 2 |
| | | | | | | | | |
| **Flight *N*** | ABC | ABC0003 | D | 31/12/2020 10:45 | Stand *N* | N/A | Gate *N* | N/A |

*FIG. 14*

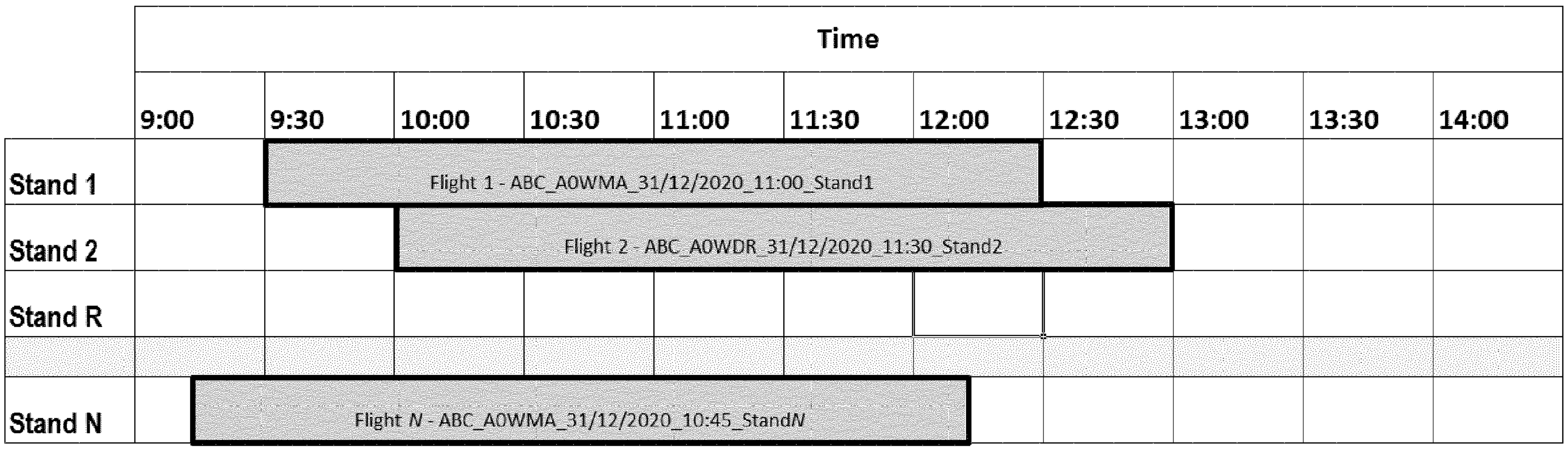


*FIG. 15*

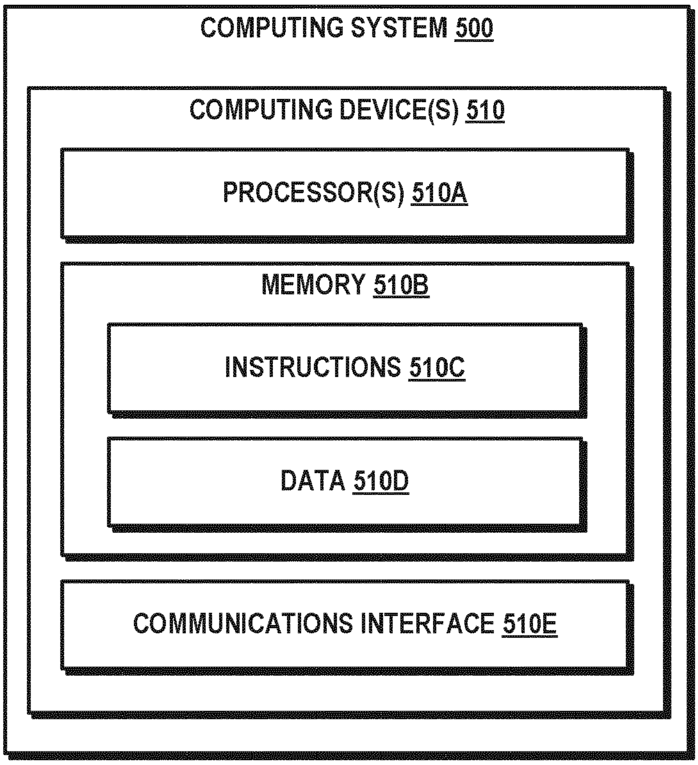
COMPUTING SYSTEM 500
COMPUTING DEVICE(S) 510
PROCESSOR(S) 510A
MEMORY 510B
INSTRUCTIONS 510C
DATA 510D
COMMUNICATIONS INTERFACE 510E

FIG. 16

Europäisches Patentamt
European Patent Office
Office européen des brevets

# EUROPEAN SEARCH REPORT

Application Number
EP 20 15 6665

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 905 728 A1 (AMADEUS SAS [FR]) 12 August 2015 (2015-08-12) * paragraph [0040] - paragraph [0068]; figures * | 1-15 | INV. B64F1/36 G06Q10/06 G06Q50/30 |
| X | US 2015/220865 A1 (ACUNA AGOST RODRIGO ALEJANDRO [FR] ET AL) 6 August 2015 (2015-08-06) * page 2, paragraph 16 - page 7, line 67; figures * | 1-15 | |
| X | KR 2015 0093102 A (AMADEUS SAS [FR]) 17 August 2015 (2015-08-17) * the whole document * | 1-15 | |
| X,P | EP 3 444 762 A1 (HONEYWELL INT INC [US]) 20 February 2019 (2019-02-20) * column 2, line 54 - column 12, line 34; figures * | 1-15 | |
| A | CN 107 886 260 A (UNIV NANJING AERONAUTICS & ASTRONAUTICS) 6 April 2018 (2018-04-06) * the whole document * | 1-15 | TECHNICAL FIELDS SEARCHED (IPC) B64F G06Q |

The present search report has been drawn up for all claims

1

| Place of search | Date of completion of the search | Examiner |
|---|---|---|
| Munich | 19 June 2020 | Silva d'Oliveira, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 15 6665

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2020

| Patent document cited in search report | Publication date | Patent family member(s) | Publication date |
|---|---|---|---|
| EP 2905728 A1 | 12-08-2015 | NONE | |
| US 2015220865 A1 | 06-08-2015 | NONE | |
| KR 20150093102 A | 17-08-2015 | AU 2015200561 A1 | 20-08-2015 |
| | | CA 2880306 A1 | 06-08-2015 |
| | | KR 20150093102 A | 17-08-2015 |
| EP 3444762 A1 | 20-02-2019 | EP 3444762 A1 | 20-02-2019 |
| | | US 2019057613 A1 | 21-02-2019 |
| | | US 2019266905 A1 | 29-08-2019 |
| CN 107886260 A | 06-04-2018 | NONE | |

EPO FORM P0459

For more details about this annex : see Official Journal of the European Patent Office, No. 12/82